**Europäisches Patentamt**

**European Patent Office**

**Office européen des brevets**

(11) Veröffentlichungsnummer: **0 125 414**
**B1**

(12) **EUROPÄISCHE PATENTSCHRIFT**

(45) Veröffentlichungstag der Patentschrift:
**15.07.87**

(51) Int. Cl.⁴: **F 16 J 1/16**

(21) Anmeldenummer: **84102622.2**

(22) Anmeldetag: **10.03.84**

(54) Kolbenzylinderanordnung, insbesondere für Verbrennungsmotoren.

(30) Priorität: **06.05.83 DE 3316514**

(43) Veröffentlichungstag der Anmeldung:
**21.11.84 Patentblatt 84/47**

(45) Bekanntmachung des Hinweises auf die Patenterteilung:
**15.07.87 Patentblatt 87/29**

(84) Benannte Vertragsstaaten:
**DE FR GB IT NL SE**

(56) Entgegenhaltungen:
**EP - A - 0 018 475**
**EP - A - 0 035 628**
**DE - A - 1 504 771**
**DE - A - 2 952 117**
**DE - A - 3 023 204**
**DE - C - 1 237 838**
**FR - A - 540 514**

**PATENTS ABSTRACTS OF JAPAN, Band 8, Nr. 116**
**(M-299)[1553], 30. Mai 1984**

(73) Patentinhaber: **Deutsche Forschungs- und**
**Versuchsanstalt für Luft- und Raumfahrt e.V.,**
**D-5300 Bonn (DE)**

(72) Erfinder: **Hinz, Bernhard, Relnsburgstrasse 151,**
**D-7000 Stuttgart (DE)**
Erfinder: **Grünlnger, Gerhard, Dr., Hoffeldstrasse 246,**
**D-7000 Stuttgart 75 (DE)**

(74) Vertreter: **Hoeger, Stellrecht & Partner,**
**Uhlandstrasse 14c, D-7000 Stuttgart 1 (DE)**

## Beschreibung

Die Erfindung betrifft eine Kolbenzylinderanordnung, insbesondere für Verbrennungsmotoren, mit einem Kolbenbolzen aus einem faserverstärkten Verbundwerkstoff, in dem in unterschiedlichen Richtungen verlaufende Fasern angeordnet sind, zur drehbaren Verbindung eines Kolbens und einer Pleuelstange.

In Brennkraftkolbenmaschinen, insbesondere in Otto- und Dieselmotoren, werden die Kolben und die Pleuelstange mittels eines Kolbenbolzens drehbar miteinander verbunden. Dieser Kolbenbolzen überträgt die Zünddruck-, Kompressions- und Massenkräfte vom Kolben auf die Pleuelstange. Der Kolbenbolzen ist dabei in eine durchgehende Bohrung im Kolben und in der Pleuelstange eingesetzt und normalerweise im Kolben und in der Pleuelstange drehbar gelagert. Die Sicherung gegen axiale Verschiebung kann beispielsweise mittels Seegerringen erfolgen.

Die an den Kolbenbolzen angreifenden Kräfte verformen ihn und führen einerseits zu einer Durchbiegung der Bolzenachse und andererseits zu einer Ovalisierung und Scherbeanspruchung des Bolzen-querschnittes. Diese Verformungen sollen möglichst gering sein. Andererseits sollte die Masse des Kolbenbolzens jedoch klein sein, um hohe Massenkräfte zu vermeiden.

Es ist bereits bekannt, Kolbenbolzen aus faserverstärktem Verbundwerkstoff herzustellen (DE-A 2 952 117, DE-A 3 023 204, DE-A 1 504 771).

Obwohl diese Kolbenbolzen wesentlich geringere Massen haben als Kolbenbolzen aus Stahl, weisen sie doch grössere Durchbiegungen auf als Kolbenbolzen aus Stahl.

Der Erfindung liegt die Aufgabe zugrunde, bei einer Kolbenzylinderanordnung der gattungsgemässen Art wesentlich verbesserte Steifigkeits- und Festigkeitswerte des Kolbenbolzens zu erreichen.

Diese Aufgabe wird bei einer Kolbenzylinderanordnung der eingangs beschriebenen Art erfindungsgemäss dadurch gelöst, dass der Kolbenbolzen im Kolben oder in der Pleuelstange gegen eine Drehung um seine Längsachse gesichert ist und erste Bereiche aufweist, in denen die Fasern in parallel zur Kolbenbolzenachse und bei einer Drehsicherung im Kolben parallel zur Kolbenachse bzw. bei einer Drehsicherung in der Pleuelstange parallel zur Pleuelstangenachse verlaufenden Ebenen so angeordnet sind, dass sie eine parallel zur Kolbenachse bzw. zur Pleuelstangenachse verlaufende Komponente aufweisen, und dass in zweiten Bereichen des Kolbenbolzens parallel zur Kolbenbolzenachse verlaufende Fasern angeordnet sind.

Der Kolbenbolzen ist also im Gegensatz zu bisher bekannten Kolbenbolzen aus Faserverbundwerkstoffen nicht rotationssymmetrisch aufgebaut, sondern enthält Bereiche, in denen die Fasern parallel zur Hauptbeanspruchungsrichtung des Kolbenbolzens verlaufen, d.h. parallel zur Kolbenachse, wenn der Kolbenbolzen im Kolben drehfest gelagert ist, bzw. parallel zur Pleuelstangenachse, wenn der Kolbenbolzen in der Pleuelstange drehfest gelagert ist. Durch diese Anordnung der Fasern in den ersten Bereichen ergibt sich eine hohe Schubfestigkeit des Kolbenbolzens, während die parallel zur Kolbenbolzenachse verlaufenden Fasern in den zweiten Bereichen eine hohe Biegefestigkeit des Kolbenbolzens erzeugen.

Vorteilhaft ist es, wenn die Fasern in den ersten Bereichen in parallel zu den Ebenen verlaufende Schichten eingebettet sind. Vorzugsweise verlaufen die Fasern in diesen Schichten diagonal zur Kolbenachse bzw. zur Pleuelstangenachse und kreuzen sich in benachbarten Schichten, d.h. die Richtung der Fasern in benachbarten Schichten ist verschieden.

Besonders vorteilhaft ist es, wenn die Fasern in den Schichten unter einem Winkel von etwa 45° zur Kolbenachse bzw. zur Pleuelstangenachse verlaufen.

Bei einer bevorzugten Ausführungsform ist vorgesehen, dass zwischen Paaren von Schichten mit diagonal verlaufenden, sich kreuzenden Fasern jeweils eine Schicht mit parallel zur Kolbenlängsachse verlaufenden Fasern angeordnet ist.

Besonders günstig ist es, wenn der Kolbenbolzen nur in seinem Kern Schichten mit Fasern aufweist, die eine parallel zur Kolbenachse bzw. zur Pleuelstangenachse verlaufende Komponente aufweisen, und wenn oberhalb und unterhalb des Kerns nur parallel zur Kolbenbolzenlängsachse verlaufende Fasern angeordnet sind. Dadurch erhält der Kern, der besonders hohen Schubspannungen ausgesetzt ist, eine besonders hohe Schubfestigkeit, während die an der Ober- und Unterseite des Kolbens liegenden Bereiche, die überwiegend auf Biegung beansprucht werden, eine hohe Biegesteifigkeit erhalten.

Es kann dabei zusätzlich vorgesehen sein, dass auch an den beiden gegenüberliegenden Seitenteilen des Kolbenbolzens nur parallel zur Kolbenbolzenachse verlaufende Fasern angeordnet sind.

Der Kern kann mit den Bereichen an der Ober- und Unterseite und gegebenenfalls mit den Seitenteilen, in denen die Fasern parallel zur Kolbenbolzenachse verlaufen, verklebt sein.

Der Kern hat vorzugsweise einen rechteckförmigen Querschnitt.

Es ist daher möglich, den Kern getrennt von den Seitenteilen herzustellen und den Kolbenbolzen erst nachträglich aus diesen Einzelteilen zusammenzufügen. Andererseits kann jedoch der beschriebene Aufbau auch einstückig angefertigt und anschliessend mechanisch überarbeitet werden, um die kreiszylindrische Form des Kolbenbolzens zu erhalten.

Bei einem weiteren bevorzugten Ausführungsbeispiel ist vorgesehen, dass in zwei im Abstand voneinander angeordneten Schichten, die parallel zur Kolbenachse bzw. zur Pleuelstangenachse sowie parallel zur Kolbenbolzenachse verlaufen, Fasern mit parallel zur Kolbenachse bzw. zur Pleuelstangenachse gerichteten Komponenten angeordnet sind, dass die beiden Schichten durch eine senkrecht zu ihnen durch das Zentrum des Kolbenbolzens verlaufende Lage miteinander verbunden sind, in der Fasern mit senkrecht zur Kolbenbolzenachse und parallel zur Lage orientierten Komponenten angeordnet sind, und dass in den übrigen Teilen des Kolbenbolzens parallel zur Kolbenbolzenachse verlaufende Fasern angeordnet sind. Die Schichten und die Lagen bilden also ein H-förmiges Stützgerüst, das von Bereichen mit parallel zur Kolbenbolzenachse verlaufenden Fasern umgeben ist.

Dabei ist vorteilhaft, wenn die auf den Innenseiten der beiden parallelen Schichten angeordneten Fasern U-förmig angeordnet sind und aus einer Schicht über die senkrecht zu den Schichten verlaufende Lage in die andere Schicht übergehen.

Vorzugsweise sind die Fasern in den parallelen Schichten und in der senkrecht dazu verlaufenden Lage in Form von Geweben in die Schichten bzw. die Lage eingebettet, wobei es günstig ist, wenn die Fadenrichtungen des Gewebes in den parallelen Schichten diagonal zur Kolbenachse bzw. zur Pleuelstangenachse verlaufen.

Bei einer vorteilhaften Ausgestaltung ist vorgesehen, dass das aus den beiden parallelen Schichten und der senkrecht dazu verlaufenden Lage gebildete H-förmige Stützelement als vorgefertigte Baueinheit mit den in einem Strangziehverfahren nachträglich aufgebrachten Bereichen mit parallel zur Kolbenbolzenachse verlaufenden Fasern verbunden ist.

Die nachfolgende Beschreibung bevorzugter Ausführungsformen der Erfindung dient im Zusammenhang mit der Zeichnung der näheren Erläuterung. Es zeigen:

Fig. 1 eine Schnittansicht durch die Verbindungsstelle zwischen einem Kolben und einem Pleuelstangenkopf;

Fig. 2 eine perspektivische Ansicht der Einzelteile eines Kolbenbolzens gemäss einem ersten bevorzugten Ausführungsbeispiel der Erfindung;

Fig. 3 eine vergrösserte Teilansicht des Bereiches A in Fig. 2;

Fig. 4 eine Ansicht ähnlich Fig. 2 eines weiteren bevorzugten Ausführungsbeispiels eines Kolbenbolzens und

Fig. 5 eine Querschnittansicht eines weiteren bevorzugten Ausführungsbeispiels eines Kolbenbolzens.

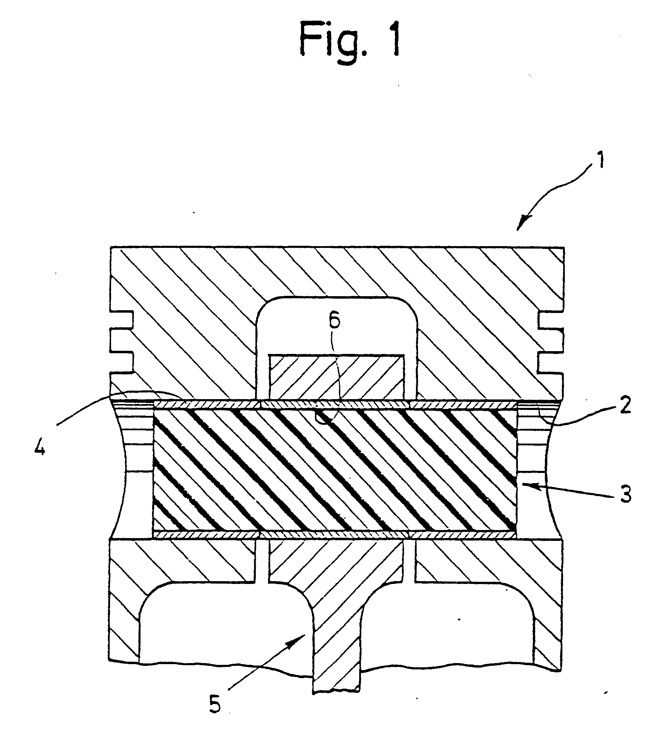

In einem in Fig. 1 nur teilweise dargestellten Kolben 1 ist in einer durchgehenden Bohrung 2 ein Kolbenbolzen 3 gelagert, der im wesentlichen aus einem faserverstärkten Verbundwerkstoff besteht und von einer metallischen Gleitlagerschicht 4 umgeben ist. Diese ist im dargestellten Ausführungsbeispiel in drei nebeneinanderliegende Teilbereiche unterteilt, wobei die Unterteilung zwischen benachbarten Teilbereichen im Übergangsbereich von dem Kolben zum Kopf einer Pleuelstange 5 angeordnet ist. Der Kolbenbolzen tritt durch eine Bohrung 6 der Pleuelstange 5 hindurch und lagert diese somit im Inneren des Kolbens 1.

Zur Sicherung des Kolbenbolzens 3 gegen eine axiale Verschiebung und gegen eine Verdrehung ist dieser entweder in der Bohrung 2 des Kolbens 1 oder in der Bohrung 6 der Pleuelstange 5 im Pressitz gehalten. Bei einer festen Lagerung im Kolben ist die Pleuelstange 5 gegenüber dem Kolbenbolzen drehbar gelagert, umgekehrt ist der Kolbenbolzen bei einer festen Lagerung in der Pleuelstange 5 in der Bohrung 2 des Kolbens 1 drehbar aufgenommen.

Es ist möglich, die Leitlagerschicht 4 in den Bereichen wegzulassen, in denen der Kolbenbolzen entweder im Kolben oder in der Pleuelstange im Pressitz gehalten ist.

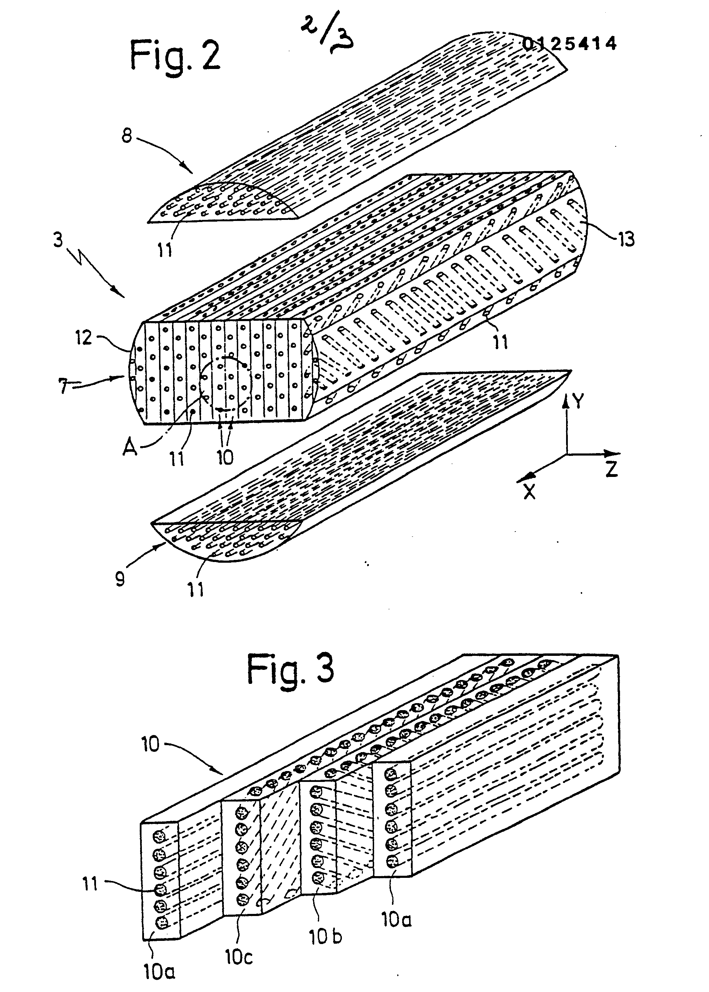

In der folgenden Beschreibung wird als Kolbenachse die senkrechte Mittelachse des Kolbens bezeichnet, als Pleuelstangenachse die zentrale Längsachse der Pleuelstange und als Kolbenbolzenachse die mittlere Längsachse des Kolbenbolzens. Zur Festlegung der Vorzugsrichtung des Kolbenbolzens wird ein rechtwinkliges Koordinatensystem eingeführt, wobei die Kolbenbolzenachse parallel zur X-Richtung angeordnet ist. Die Y-Richtung wird bei einem im Kolben im Pressitz gehaltenen Kolbenbolzen durch die Kolbenachse bestimmt, bei einem in der Pleuelstange im Pressitz gehaltenen Kolbenbolzen dagegen durch die Pleuelstangenachse. Die Z-Richtung steht senkrecht auf der X-Richtung und auf der Y-Richtung (Fig. 2).

Anhand der Figuren 2 und 3 wird ein erstes bevorzugtes Ausführungsbeispiel eines Kolbenbolzens erörtert. Der in Fig. 2 in Explosionsdarstellung gezeigte Kolbenbolzen umfasst einen Kern 7 sowie Oberteil 8 und Unterteil 9, die längs einer parallel zur X-Z-Ebene verlaufenden Ebene aneinandergefügt sind, vorzugsweise durch Verklebung.

Der Kern 7 ist aufgebaut aus parallel zur X-Y-Ebene verlaufenden Schichten 10, in denen Fasern 11 in unterschiedlichen Richtungen verlaufen. In Fig. 3 ist ein möglicher Faserverlauf dargestellt. Danach verlaufen in einer ersten Schicht 10a alle Fasern parallel zur Kolbenbolzenachse, d.h. parallel zur X-Richtung. In einer benachbarten Schicht 10b sind alle Fasern parallel zur X-Y-Ebene schräg zur Y-Achse angeordnet, vorzugsweise unter einem Winkel von 45°. In der darauffolgenden Schicht 10c verlaufen die Fasern ebenfalls in der X-Y-Ebene schräg zur Y-Richtung, jedoch mit entgegengesetzter Neigung gegenüber den Fasern in der benachbarten Schicht 10b, ebenfalls vorzugsweise unter einem Winkel von 45°. Dieser Schichtaufbau wiederholt sich, d.h. an die Schicht 10c schliesst sich wieder eine Schicht 10a an.

In dem Oberteil 8 und in dem Unterteil 9, die einen segmentförmigen Querschnitt haben, verlaufen die Fasern 11 parallel zur Kolbenbolzenachse, d.h. parallel zur X-Richtung.

In dem in Fig. 2 dargestellten Ausführungsbeispiel hat der Kern 7 einen im wesentlichen rechteckförmigen Querschnitt, wobei die beiden Seitenflächen 12 und 13 im Querschnitt kreisförmig begrenzt sind, so dass sich bei aufgeklebtem Oberteil 8 und Unterteil 9 ein kreisförmiger Querschnitt ergibt.

Bei dem beschriebenen Aufbau bewirken Oberteil 8 und Unterteil 9 durch die parallel zur X-Richtung verlaufenden Fasern 11 eine hohe Biegesteifigkeit des Kolbenbolzens, während die diagonal verlaufenden Fasern in Schichten 10b und 10c zu einer hohen Schubsteifigkeit des Kolbenbolzens führen, und zwar bevorzugt im Kernbereich, der besonders hohen Schubspannungen ausgesetzt ist. Durch diesen Aufbau ergibt sich bei der üblichen Beanspruchung im Betrieb eine besonders geringe Durchbiegung, da in den Bereichen, in denen vorwiegend Biegespannungen auftreten, also im Oberteil 8 und im Unterteil 9, parallel zur Kolbenbolzenachse verlaufende Fasern angeordnet sind.

Der in den Figuren 2 und 3 dargestellte Kolbenbolzen lässt sich beispielsweise dadurch herstellen, dass der Kern sowie Oberteil und Unterteil jeweils für sich in einem Strangzieh- oder Pressverfahren hergestellt und anschliessend längs ihrer Trennflächen miteinander verklebt werden. In einem nächsten Arbeitsgang wird der auf diese Weise erhaltene Kolbenbolzen auf einen der Gleitlagerschicht 4 entsprechenden Durchmesser geschliffen und mit dieser verklebt.

Eine Abwandlung des in Fig. 2 dargestellten Ausführungsbeispiels ist ein nur aus dem Kern 7 und der Gleitlagerhülse 4 bestehender Kolbenbolzen. Bei diesem Ausführungsbeispiel hat der Kern 7 vollkommen kreisförmigen Querschnitt.

In Abwandlung von dem in Fig. 2 dargestellten Ausführungsbeispiel ist es möglich, im Kern 7 Schichten mit parallel zur Kolbenbolzenachse verlaufenden Fasern wegzulassen, so dass dann nur in Schichten 10b und 10c entsprechende Schichten im Kern angeordnet sind. Weiterhin ist es möglich, die parallel verlaufenden Fasern in den einzelnen Schichten 10 durch Gewebe zu ersetzen, so dass sich beispielsweise bei diagonal angeordnetem Gewebe innerhalb einer einzigen Schicht diagonal verlaufende, sich kreuzende Fasern befinden. In diesem Fall wäre es möglich, benachbarte Schichten 10 gleich aufzubauen, d.h. im Kern 7 eine grössere Anzahl von gleich ausgerichteten Gewebelagen nebeneinander in den Werkstoff einzubetten.

Auch die parallel zur Kolbenbolzenachse verlaufenden Fasern können durch Gewebeeinlagen ersetzt werden.

Die Richtung der Fasern in Schichten 10b und 10c kann variieren, beispielsweise ist es sogar möglich, die Fasern in diesen Schichten parallel zur Y-Richtung verlaufen zu lassen, also senkrecht zur Kolbenbolzenachse, obwohl eine Anordnung, wie sie in den Figuren 2 und 3 dargestellt ist, bei der also die Fasern unter etwa 45° verlaufen und ihre Neigung in benachbarten Schichten abwechselt, besonders vorteilhaft ist.

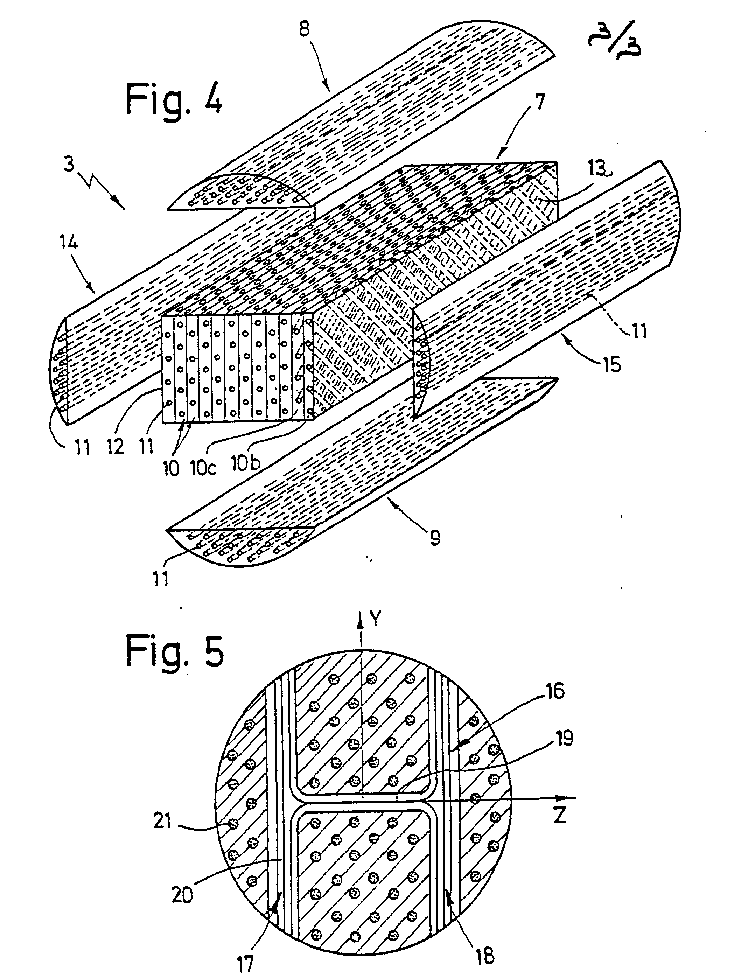

Eine abgewandelte Ausführungsform ist in Fig. 4 dargestellt. Einander entsprechende Teile tragen dieselben Bezugzeichen wie im Ausführungsbeispiel der Figuren 2 und 3.

Bei diesem Ausführungsbeispiel enthält der Kern 7 lediglich Schichten 10b und 10c mit zur Y-Richtung schräg angeordneten Fasern 11, wobei die Neigung der Fasern in benachbarten Schichten entgegengesetzt ist. Im Unterschied zum Ausführungsbeispiel der Fig. 2 hat der Kern weiterhin einen rechteckförmigen, vorzugsweise quadratischen Querschnitt und neben einem Oberteil 8 und einem Unterteil 9 ist der Kern mit im Querschnitt segmentförmigen Seitenteilen 14 und 15 verbunden, die ebenso wie das Oberteil 8 und das Unterteil 9 mit den ebenen Seitenflächen 12 bzw. 13 des Kerns verklebt sind. In den Seitenteilen 14 und 15 verlaufen die Fasern 11 parallel zur Kolbenbolzenachse. Ein solcher Kolbenbolzen weist zwar eine etwas grössere Durchbiegung auf als der der Fig. 2, jedoch ist er aufgrund des verringerten Schleifaufwandes kostengünstiger herstellbar.

Auch bei diesem Ausführungsbeispiel können die Fasern durch Gewebe ersetzt werden, wie dies anhand des Ausführungsbeispieles der Fig. 2 erläutert worden ist.

Bei einem weiteren bevorzugten Ausführungsbeispiel, das in Fig. 5 lediglich im Querschnitt dargestellt ist, enthält der Kolbenbolzen ein H-förmiges Stützgerüst 16, welches aus zwei einander parallelen und voneinander im Abstand angeordneten Schichten 17 und 18 und einer senkrecht zu diesen Schichten verlaufende, diese miteinander verbindenden und durch die Kolbenachse verlaufenden Lage 19 gebildet wird. Die Schichten 17 und 18 sind dabei parallel zur X-Y-Ebene, die Lage 19 liegt in der X-Z-Ebene. Innerhalb der Schichten 17 und 18 sind parallel zu den Schichten verlaufende Fasern 20 angeordnet, die entweder parallel zur Y-Richtung verlaufen oder schräg zu dieser. In gleicher Weise sind in die Lage 19 Fasern 20 eingebettet, die entweder parallel zur Z-Richtung oder schräg zu dieser orientiert sind. Es kann sich dabei um parallel zueinander angeordnete Fasern handeln, vorzugsweise werden die Fasern jedoch in Form von Geweben eingebettet, deren Fäden vorzugsweise in den Schichten 17 und 18 schräg zur Y-Richtung, in der Lage 19 schräg zur Z-Richtung verlaufen.

Ausserdem ist es vorteilhaft, wenn die auf den einander zugewandten Seiten der Schichten 17 und 18 eingebetteten Fasern einen U-förmigen Verlauf haben, so dass sie aus einer Schicht durch die die beiden Schichten verbindenden Lage 19 hindurch in die andere Schicht eintreten.

Das H-förmige Stützgerüst, das sich über die gesamte Kolbenbolzenlänge erstreckt, wird in einem Strangziehverfahren mit einem Werkstoff umgeben, in dem parallel zur Kolbenbolzenachse verlaufende Fasern 21 angeordnet sind. Der auf diese Weise hergestellte Kolbenbolzen wird ähnlich wie in dem oben beschriebenen Fall an seinem Umfang so bearbeitet, dass er in eine Gleitlagerschicht eingepasst werden kann.

Durch die beschriebene Ausgestaltung wird eine hohe Schubfestigkeit in der X-Y-Ebene erzielt, und die parallel zur Kolbenbolzenachse verlaufenden Fasern 21 garantieren eine hohe Biegesteifigkeit.

Durch eine geeignete Wahl der Anzahl der Faserlagen, die sich über die gesamte Ebene der Schichten 17 und 18 erstrecken, und der Faserlagen, die U-förmig in die jeweils andere Schicht übertreten, kann man den Kolbenbolzen so gestalten, dass die Durchbiegung, d.h. die Summe aus Biege- und Schubdeformation, minimal wird.

Die Fasern können aus Kohlenstoff, Bor, Glas, Polyamiden oder Mischungen aus diesen Substanzen bestehen, als Matrixwerkstoff, in den die Fasern eingebettet werden, können hochtemperaturbeständige Modifikationen der Duromere Epoxid, Polyester oder Polyimid verwendet werden oder hochtemperaturbeständige Thermoplaste wie Polykarbonate oder Polysulfone.

Die drehfeste Anordnung des Kolbenbolzens in der Pleuelstange bzw. im Kolben ermöglicht es also, von dem üblichen rotationssymmetrischen Aufbau eines Kolbenbolzens abzugehen und den jeweils auftretenden mechanischen Beanspruchungen des Kolbenbolzens entsprechende Anordnungen der Fasern zu wählen, d.h. die Fasern können entsprechend den Hauptbeanspruchungsrichtungen angeordnet werden, da durch die drehfeste Lagerung des Kolbenbolzens die Orientierung des Kolbenbolzens gegenüber den Hauptbelastungsrichtungen im wesentlichen beibehalten wird.

**Patentansprüche**

1. Kolbenzylinderanordnung, insbesondere für Verbrennungsmotoren, mit einem Kolbenbolzen (3) aus einem faserverstärkten Verbundwerkstoff, in dem in unterschiedlichen Richtungen verlaufende Fasern (11; 20) angeordnet sind, zur drehbaren Verbindung eines Kolbens und einer Pleuelstange (5), dadurch gekennzeichnet, dass der Kolbenbolzen (3) im Kolben (1) oder in der Pleuelstange (5) gegen eine Drehung um seine Längsachse (X-Achse) gesichert ist und erste Bereiche (Schichten 10b, 10c; Schichten 17, 18) aufweist, in denen die Fasern (11; 20) in parallel zur Kolbenbolzenachse (X-Achse) und bei einer Drehsicherung im Kolben (1) parallel zur Kolbenachse bzw. bei einer Drehsicherung in der Pleuelstange (5) parallel zur Pleuelstangenachse verlaufenden Ebenen so angeordnet sind, dass sie eine parallel zur Kolbenachse bzw. zur Pleuelstangenachse verlaufende Komponente aufweisen, und dass in zweiten Bereichen (Schicht 10a, Oberteil 8, Unterteil 9, Seitenteile 14, 15) des Kolbenbolzens (3) parallel zur Kolbenbolzenachse (X-Richtung) verlaufende Fasern (11; 21) angeordnet sind.

2. Kolbenzylinderanordnung nach Anspruch 1, dadurch gekennzeichnet, dass die Fasern (11) in den ersten Bereichen in parallel zu den Ebenen verlaufende Schichten (10) eingebettet sind.

3. Kolbenzylinderanordnung nach Anspruch 2, dadurch gekennzeichnet, dass die Fasern (11) in den Schichten (10b, 10c) diagonal zur Kolbenachse bzw. zur Pleuelstangenachse (Y-Richtung) verlaufen und dass sich Fasern (11) benachbarter Schichten (10b, 10c) kreuzen.

4. Kolbenzylinderanordnung nach Anspruch 3, dadurch gekennzeichnet, dass die Fasern (11) in den Schichten (10b, 10c) unter einem Winkel von etwa 45° zur Kolbenachse bzw. zur Pleuelstangenachse (Y-Richtung) verlaufen.

5. Kolbenzylinderanordnung nach einem der Ansprüche 3 oder 4, dadurch gekennzeichnet, dass zwischen Paaren von Schichten (10b, 10c) mit diagonal verlaufenden, sich kreuzenden Fasern (11) jeweils eine Schicht (10a) mit parallel zur Kolbenbolzenachse (X-Richtung) verlaufenden Fasern (11) angeordnet ist.

6. Kolbenzylinderanordnung nach einem der voranstehenden Ansprüche, dadurch gekennzeichnet, dass der Kolbenbolzen (3) nur in seinem Kern (7) Schichten (10b, 10c) mit Fasern (11) aufweist, die eine parallel zur Kolbenachse bzw. zur Pleuelstangenachse (Y-Richtung) verlaufende Komponente aufweisen, und dass oberhalb und unterhalb des Kerns (7) nur parallel zur Kolbenbolzenachse (X-Richtung) verlaufende Fasern (11) angeordnet sind.

7. Kolbenzylinderanordnung nach Anspruch 6, dadurch gekennzeichnet, dass auch an den beiden gegenüberliegenden Seitenteilen (14, 15) des Kolbenbolzens (3) nur parallel zur Kolbenbolzenachse (X-Richtung) verlaufende Fasern (11) angeordnet sind.

8. Kolbenzylinderanordnung nach einem der Ansprüche 6 oder 7, dadurch gekennzeichnet, dass der Kern (7) mit den Bereichen an der Ober- und Unterseite (Oberteil 8, Unterteil 9) und gegebenenfalls mit den Seitenteilen (14, 15), in denen die Fasern (11) parallel zur Kolbenbolzenachse (X-Richtung) verlaufen, verklebt ist.

9. Kolbenzylinderanordnung nach Anspruch 8, dadurch gekennzeichnet, dass der Kern (7) einen rechteckförmigen Querschnitt hat.

10. Kolbenzylinderanordnung nach Anspruch 2, dadurch gekennzeichnet, dass in zwei im Abstand voneinander angeordneten Schichten (17, 18), die parallel zur Kolbenachse bzw. zur Pleuelstangenachse (Y-Richtung) sowie parallel zur Kolbenbolzenachse (X-Richtung) verlaufen, Fasern (20) mit parallel zur Kolbenachse bzw. zur Pleuelstangenachse (Y-Richtung) gerichteten Komponenten angeordnet sind, dass die beiden Schichten (17, 18) durch eine senkrecht zu ihnen durch das Zentrum des Kolbenbolzens (3) verlaufende Lage (19) miteinander verbunden sind, in der Fasern mit senkrecht zur Kolbenbolzenachse (X-Achse) und parallel zur Lage (19) orientierten Komponenten angeordnet sind, und dass in den übrigen Teilen des Kolbenbolzens (3) parallel zur Kolbenbolzenachse (X-Richtung) verlaufende Fasern (21) angeordnet sind.

11. Kolbenzylinderanordnung nach Anspruch 10, dadurch gekennzeichnet, dass die auf den Innenseiten der beiden parallelen Schichten (17, 18) angeordneten Fasern (20) U-förmig angeordnet sind und aus einer Schicht (17) über die senkrecht zu den Schichten (17, 18) verlaufende Lage (19) in die andere Schicht (18) übergehen.

12. Kolbenzylinderanordnung nach Anspruch 10 oder 11, dadurch gekennzeichnet, dass die Fasern (20) in den parallelen Schichten (17, 18) und in der senkrecht dazu verlaufenden Lage (19) in Form von Geweben in die Schichten (17, 18) bzw. die Lage (18) eingebettet sind.

13. Kolbenzylinderanordnung nach Anspruch 12, dadurch gekennzeichnet, dass die Fadenrichtungen des Gewebes in den parallelen Schichten (17, 18) diagonal zur Kolbenachse bzw. zur Pleuelstangenachse (Y-Richtung verlaufen.

14. Kolbenzylinderanordnung nach einem der Ansprüche 10 bis 13, dadurch gekennzeichnet, dass das aus den beiden parallelen Schichten (17, 18) und der senkrecht dazu verlaufenden Lage (19) gebildete H-förmige Stützelement (16) als vorgefertigte Baueinheit mit den in einem Strangziehverfahren nachträglich aufgebrachten Bereichen mit parallel zur Kolbenbolzenachse (X-Richtung) verlaufenden Fasern (21) verbunden ist.

**Revendications**

1. Ensemble piston-cylindre, en particulier pour moteurs à combustion interne, comprenant un axe de piston (3) fait d'une matière composite renforcée de fibres, dans laquelle sont disposées des fibres (11; 20) qui s'étendent dans différentes directions, et qui sert à articuler un piston à une bielle (5), caractérisé en ce que l'axe de piston (3) est bloqué à l'encontre de sa rotation autour de son axe longitudinal (axe X), soit dans le piston (1), soit dans la bielle (5) et présente des premières régions (couches 10b, 10c; couches 17, 18) dans lesquelles les fibres (11, 20) sont disposées dans des plans qui s'étendent parallèlement à l'axe géométrique de l'axe de piston (axe X) et dans des plans qui s'étendent parallèlement à l'axe géométrique du piston, dans le cas d'un blocage solidairement en rotation dans le piston (1), ou dans des plans qui s'étendent parallèlement à l'axe géométrique de la bielle, dans le cas d'un blocage solidaire en rotation dans la bielle (5), en ce qu'elles présentent une composante s'étendant parallèlement à l'axe géométrique du piston ou à l'axe géométrique de la bielle, selon le cas, et en ce que, dans des deuxièmes régions (couche 10a, partie supérieure 8, partie inférieure 9, parties latérales 14, 15) de l'axe de piston (3), son disposées des fibres (11; 21) qui s'étendent parallèlement à l'axe géométrique de l'axe de piston (direction X).

2. Ensemble piston-cylindre selon la revendication 1, caractérisé en ce que, dans les premières régions, les fibres (11) sont noyées dans des couches (10) qui s'étendent parallèlement aux plans.

3. Ensemble piston-cylindre selon la revendication 2, caractérisé en ce que les fibres (11) contenues dans les couches (10b, 10c) s'étendent obliquement à l'axe géométrique du piston ou à l'axe géométrique de la bielle, selon le cas, (direction Y) et en ce que les fibres (11) contenues dans les couches voisines (10b, 10c) se croisent mutuellement.

4. Ensemble piston-cylindre selon la revendication 3, caractérisé en ce que les fibres (11) contenues dans les couches (10b, 10c) s'étendent dans une direction qui forme un angle d'environ 45° avec l'axe géométrique du piston ou avec l'axe géométrique de la bielle (direction Y).

5. Ensemble piston-cylindre selon l'une des revendications 3 et 4, caractérisé en ce que, dans chaque intervalle entre deux paires de couches (10b, 10c) contenant des fibres (21) s'étendant en diagonale et qui se croisent, est interposée une couche (10a) contenant des fibres (11) qui s'étendent parallèlement à l'axe géométrique de l'axe de piston (direction X).

6. Ensemble piston-cylindre selon l'une des revendications précédentes, caractérisé en ce que le piston (3) ne contient que dans son noyau (7) des couches (10b, 10c) comprenant des fibres (11) qui présentent une composante s'étendant parallèlement à l'axe géométrique du piston ou à l'axe géométrique de la bielle, selon le cas, (direction Y) et en ce que, au-dessus et au-dessous du noyau (7) sont disposées exclusivement des fibres (11) qui s'étendent parallèlement à l'axe géométrique de l'axe de piston (direction X).

7. Ensemble piston-cylindre selon la revendication 6, caractérisé en ce qu'également dans les deux parties latérales opposées (14, 15) de l'axe de piston (3) sont disposées exclusivement des fibres (11) qui s'étendent parallèlement à l'axe géométrique de l'axe de piston (direction X).

8. Ensemble piston-cylindre selon l'une des revendications 6 et 7, caractérisé en ce que le noyau (7) est collé aux régions situées le long du côté supérieur et du côté inférieur (partie supérieure 8, partie inférieure 9) et éventuellement aux parties latérales 14, 15) dans lesquelles les fibres (11) s'étendent parallèlement à l'axe géométrique de l'axe de piston (direction X).

9. Ensemble piston-cylindre selon la revendication 8, caractérisé en ce que le noyau (7) possède une section rectangulaire.

10. Ensemble piston-cylindre selon la revendication 2, caractérisé en ce que, dans deux couches (17, 18) disposées à une certaine distance l'une de l'autre, et qui s'étendent parallèlement à l'axe géométrique du piston ou à l'axe géométrique de la bielle, selon le cas, (direction Y), ainsi que parallèlement à l'axe géométrique de l'axe de piston (direction X), sont disposées des fibres (20) qui possèdent des composantes orientées parallèlement à l'axe géométrique du piston ou à l'axe géométrique de la bielle, selon le cas, (direction Y), en ce que les deux couches (17, 18) sont réunies l'une à l'autre par un pli (19) qui s'étend perpendiculairement à ces couches en passant par le centre de l'axe de piston (3) et dans lequel sont disposées des fibres qui possèdent des composantes orientées perpendiculairement à l'axe géométrique de l'axe de piston (axe X) et parallèlement au pli (19) et en ce que, dans les autres parties de l'axe de piston (3) sont disposées des fibres (21) qui s'étendent parallèlement à l'axe géométrique à l'axe de piston (direction X).

11. Ensemble piston-cylindre selon la revendication 10, caractérisé en ce que les fibres disposées sur les faces internes des deux couches parallèles (17, 18) sont disposées en U et s'étendent d'une couche (17) à l'autre couche (18) en passant dans le pli (19) qui s'étend perpendiculairement aux couches (17, 18).

12. Ensemble piston-cylindre selon la revendication 10 ou la revendication 11, caractérisé en ce que les fibres (20) contenues dans les couches parallèles (17, 18) et dans le pli (19) qui s'étend perpendiculairement à ces couches, sont noyées dans les couches (17, 18) ou dans le pli (19) sous la forme de tissus.

13. Ensemble piston-cylindre selon la revendication 12, caractérisé en ce que, dans les couches parallèles (17, 18), les directions des fils du tissu s'étendent obliquement à l'axe géométrique du piston ou à l'axe géométrique de la bielle, selon le cas (direction Y).

14. Ensemble piston-cylindre selon l'une des revendications 10 à 13, caractérisé en ce que l'élément d'appui (16) en forme de U composé des deux couches parallèles (17, 18) et du pli (19) qui s'étend perpendiculairement à ces couches est constitué par un sous-ensemble préfabriqué qui est réuni aux régions qui comprennent des fibres (21) s'étendant parallèlement à l'axe géométrique de l'axe de piston (direction X) et qui sont fixées ultérieurement dans une opération d'extrusion-tirage.

## Claims

1. A piston-cylinder arrangement, in particular for internal combustion engines, comprising a piston pin (3) made of a fiber-reinforced composite material, in which fibers (11; 20) running in different directions are arranged, for rotatable connection of a piston and a connecting rod, characterized in that the piston pin (3) is secured in the piston (1) or in the connecting rod (5) against rotation about its longitudinal axis (X-axis) and has first regions (layers 10b, 10c; layers 17, 18) in which the fibers (11; 20) are arranged in planes extending parallel to the piston pin axis (X-axis) and, when the piston pin is secured against rotation in the piston (1), parallel to the piston axis or, when the piston pin is secured against rotation in the connecting rod (5), parallel to the connecting rod axis such that they comprise a component extending parallel to the piston axis and the connecting rod axis, respectively, and that fibers (11; 21) running parallel to the piston pin axis (X direction) are arranged in second regions (layer 10a, upper portion 8, lower portion 9, side portions 14, 15) of the piston pin (3).

2. Piston-cylinder arrangement as defined in claim 1, characterized in that the fibers (11) in the first regions are embedded in layers (10) running parallel to the planes.

3. Piston-cylinder arrangement as defined in claim 2, characterized in that the fibers (11) in the layers (10b, 10c) run diagonally to the piston axis and connecting rod axis (Y direction) respectively, and that fibers (11) of adjacent layers (10b, 10c) cross.

4. Piston-cylinder arrangement as defined in claim 3, characterized in that the fibers (11) in the layers (10b, 10c) extend at an angle of approximately 45° relative to the piston axis and connecting rod axis (Y direction), respectively.

5. Piston-cylinder arrangement as defined in one of claims 3 or 4, characterized in that a layer (10a) comprising fibers (11) running parallel to the piston pin axis (X direction) is arranged each time between pairs of layers (10b, 10c) comprising diagonal, crossing fibers (11).

6. Piston-cylinder arrangement as defined in any of the preceding claims, characterized in that the piston pin (3) has layers (10b, 10c) comprising fibers which include a component extending parallel to the piston axis and to the connecting rod axis (Y direction), respectively, only in its core (7), and that the fibers (11) arranged above and below the core (7) only extend parallel to the piston pin axis (X direction).

7. Piston-cylinder arrangement as defined in claim 6, characterized in that the fibers (11) arranged in the two opposed side portions (14, 15) of the piston pin (3) again extend only parallel to the piston pin axis (X direction).

8. Piston-cylinder arrangement as defined in one of claims 6 or 7, characterized in that the core (7) is adhered to the regions at the upper and lower sides (upper portion 8, lower portion 9) and, if required, to the side portions (14, 15) in which the fibers (11) run parallel to the piston pin axis (X direction).

9. Piston-cylinder arrangement as defined in claim 8, characterized in that the core (7) has a rectangular cross section.

10. Piston-cylinder arrangement as defined in claim 2, characterized in that fibers (20) comprising components directed parallel to the piston axis and connecting rod axis (Y direction), respectively, are arranged in two spaced layers (17, 18) which extend parallel to the piston axis and connecting rod axis (Y direction), respectively, as well as parallel to the piston pin axis (X direction), that the two layers, (17, 18) are connected with one another by a layer (19) extending at right angles thereto through the center of the piston pin (3), the fibers arranged in said layer comprising components oriented at right angles to the piston pin axis (X axis) and parallel to the layer (19), and that the fibers (21) arranged in the remaining parts of the piston pin (3) extend parallel to the piston pin axis (X direction).

11. Piston-cylinder arrangement as defined in claim 10, characterized in that the fibers (20) arranged on the inner sides of the two parallel layers (17, 18) are arranged in a U shape and pass from one layer (17) through the layer (19) extending at right angles to the layers (17, 18) and into the other layer (18).

12. Piston-cylinder arrangement as defined in claims 10 or 11, characterized in that the fibers (20) in the parallel layers (17, 18) and in the layer (19) extending at right angles thereto are embedded in the layers (17, 18) and the layer (19), respectively, in the form of webs.

13. Piston-cylinder arrangement as defined in claim 12, characterized in that the fiber directions of the web in the parallel layers (17, 18) extend diagonally to the piston axis and connecting rod axis (Y direction), respectively.

14. Piston-cylinder arrangement as defined in any of claims 10 to 13, characterized in that the H-shaped support element (16) formed of the two parallel layers (17, 18) and the layer (19) extending at right angles thereto is connected as a prefabricated individual unit with the regions subsequently applied in an extrusion process and comprising fibers (21) running parallel to the piston pin axis (X direction).

½

# Fig. 1

# Fig. 2

# Fig. 3

# Fig. 4

8

7

13

3

14

11

15

11 12 11

10 10c 10b

9

11

# Fig. 5

Y

16

19

Z

21

20

17

18

13